# EUROPÄISCHE PATENTSCHRIFT

(11) **EP 0 468 197 B1**
(45) Veröffentlichungstag und Bekanntmachung des Hinweises auf die Patenterteilung: **22.12.1993**
(21) Anmeldenummer: 91110144.2
(22) Anmeldetag: 20.06.1991
(51) Int. Cl.: B01D 5/00, F25B 39/04, F28B 1/04

(54) **Verfahren und Vorrichtung zum Verflüssigen von dampf- oder gasförmigen Medien**
Method and apparatus for condensing a vapour or a gaseous fluid
Procédé et dispositif pour condenser des fluides gazeuses ou des vapeurs

(30) Priorität: 24.07.1990 DE 4023422
(43) Veröffentlichungstag der Anmeldung: 29.01.1992
(73) Patentinhaber: Weisshaar, Peter, D-32108 Bad Salzuflen (DE)
(72) Erfinder: Weisshaar, Peter, D-32108 Bad Salzuflen (DE)
(74) Vertreter: Stracke, Alexander, Dipl.-Ing.

(56) Entgegenhaltungen:
- DE-A- 3 929 519

## Beschreibung

Die vorliegende Erfindung betrifft ein Verfahren zum Verflüssigen von dampf- oder gasförmigen Medien sowie eine Vorrichtung zur Durchführung des Verfahrens.

Derartige Verfahren sind in vielfältiger Form bekannt.

So gibt es beispielsweise Verfahren, bei denen zum Verflüssigen von dampf- oder gasförmigen Medien oder als Extraktionseinrichtung von Dampf- oder Gasgemischen Verdichter Verwendung finden, die nach dem Verdrängerprinzip arbeiten, um die betreffenden Dämpfe bzw. Gase abzusaugen und auf Verflüssigungsdruck zu verdichten.

Analog gilt dies auch für Kompressionskältekreisläufe, die auf dem Kaltdampfprinzip beruhen.

Grundsätzlich sind diese bekannten Verfahren jedoch vom Aufwand her sehr kostenintensiv, was sowohl den apparativen Aufwand als auch die Durchführung des Verfahrens betrifft. Auch ist der Energieaufwand relativ hoch, was einem optimalen wirtschaftlichen Betrieb gleichfalls entgegensteht.

Der vorliegenden Erfindung liegt die Aufgabe zugrunde, ein Verfahren zu entwickeln, mit dem viele unterschiedliche dampf- oder gasförmige Medien mit möglichst geringem Energieaufwand abgesaugt und verflüssigt werden können.

Diese Aufgabe wird erfindungsgemäß durch die im kennzeichnenden Teil des Anspruchs 1 genannten Merkmale gelöst.

Im Gegensatz zum Kompressionsverfahren nach dem Verdrängerprinzip werden bei dem Verfahren nach der Erfindung keine Dampf- oder Gasvolumina abgesaugt und verdichtet. Vielmehr werden unabhängig von der Dichte oder dem spezifischen Volumen des zu verflüssigenden Dampfes bzw. Gases lediglich die Dampf- oder Gasmoleküle mittels van der Waalsscher-Kräfte adsorbtiv gebunden und verflüssigt und anschließend bei gleichzeitiger Wärmeabfuhr, durch die bei der Rotation auftretenden Flichkräfte, auf ein höheres Druckniveau tansportiert. Dabei macht sich das Verfahren die Fähigkeit des Molekularsiebes/Trockenmittels zunutze, Wasserdampfmoleküle, andere Dämpfe oder technische Gase adsorbtiv zu binden, wobei die Wirkung dieser Trockenmittel/Molekularsiebe auf einer sehr großen aktiven Oberfläche beruht, an der die Moleküle, wie bereits erwähnt, durch van der Waalssche -Kräfte gehalten werden. Als Molekularsiebe können beispielsweise Aluminiumoxyd- oder Siliciumoxydverbindungen eingesetzt werden. Das Trockenmittel kann aus Silikagel gebildet sein.

Mit diesem Verfahren ist insbesondere auch die ölfreie Verflüssigung von Dämpfen oder Gasen mit großem spezifischen Volumen im Niederdruckbereich möglich. Dadurch können beispielsweise in bestimmten Temperaturbereichen die umweltschädlichen FCKW-Kältemitte durch Wasser als Kältemittel ersetzt werden.

Die in einem Trockenmittel/Molekularsieb -Ring gebundenen Flüssigkeitsmoleküle werden durch die bei der Rotation auftretenden Fliehkräfte in radialer Richtung herausgepreßt, so daß sie auf der Außenseite des Ringes austreten. Dies gilt jedoch nicht für die Dampf-/Gasmoleküle, die in die Kristallstruktur des Trockenmittels/Molekularsiebes aufgenommen sind.

Unter der Voraussetzung, daß auf der Außenseite ein geschlossener Raum vorhanden ist, nimmt der Druck auf der Außenseite des Ringes zu und wird schließlich gleich oder größer dem Verflüssigungsdruck der transportierten Flüssigkeitsmoleküle.
Grundsätzlich beruht die Wirkung des Verfahrens darauf, daß die auftretenden Fliehkräfte bei der Rotation des Ringes größer sind als die van der Waalsschen -Kräfte mit denen die Flüssigkeitsmoleküle an der inneren Oberfläche des Ringes gehalten werden.

Aufgrund ihrer kinetischen Energie bewirken die adsorbierten Dampf-/Gasmoleküle eine Erwärmung des Ringes, die dessen Wirksamkeit herabsetzt. Aus diesem Grunde ist es wichtig, daß während der Beaufschlagung des Ringes mit Dampf-/Gasmolekülen eine kontinuierliche Wärmeabführung gewährleistet ist.

Eine Vorrichtung zur Durchführung des Verfahrens ist so gestaltet, daß der Ring aus einem Molekularsieb/Trockenmittel an der inneren Mantelfläche eines mit Öffnungen versehenen, gut wärmeleitfähigen Rotationszylinders angeordnet ist, der zumindest teilweise direkt oder indirekt gekühlt wird.

Dabei ist es wichtig, daß die Wärmeabführung über die gesamte Außenfläche des Ringes wirksam werden kann.

Weitere vorteilhafte Ausführungen des Verfahrens sowie der Vorrichtung sind in den Unteransprüchen gekennzeichnet. Ausführungsbeispiele der Vorrichtung sowie die Funktionsweise des Verfahrens werden nachfolgend anhand der beigefügten Zeichnungen beschrieben.

Es zeigen:
- Fig. 1: eine schematisierte Darstellung einer Vorrichtung zur Durchführung des Verfahrens,
- Fig. 2: eine Vorrichtung basierend auf dem Funktionsprinzip der Vorrichtung nach der Figur 1 zur Verflüssigung von Dampf oder eines Gases,
- Fig. 3: eine Einzelheit der Vorrichtung gemäß dem Ausschnitt III in Figur 2,
- Fig. 4: die komplettierte Vorrichtung nach der Figur 2 schematisch dargestellt,
- Fig. 5: ein weiteres Ausführungsbeispiel einer Vorrichtung zur Verflüssigung von z. B. Wasserdampf in einer Schnittdarstellung.

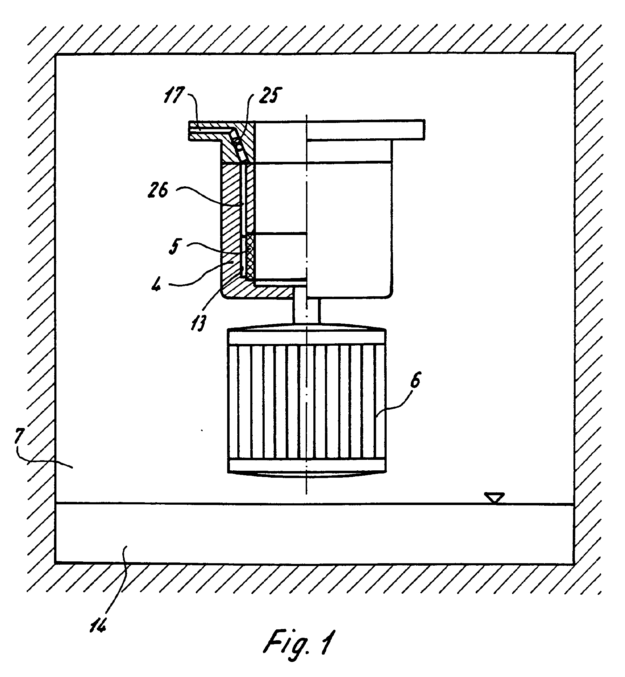

Eine in der Figur 1 bzw. den Figuren 2 bis 4 dargestellte Vorrichtung weist einen zylinderförmigen, auf einer Stirnseite offenen Rotationszylinder 4 auf, an dessen innerer Mantelfläche ein Ring aus einem Trockenmittel 5 angeordnet ist, wobei dieses Trockenmittel 5 sich über den gesamten Umfang des Rotationszylinders 4 und in seiner Höhe über einen Teilbereich, beginnend vom Boden des Rotationszylinders 4 an, erstreckt.

Das Trockenmittel 5 ist dabei fest mit dem Rotationszylinder 4 verbunden. Anstelle des Trockenmittels 5 kann auch ein Molekularsieb vorgesehen sein.

Zwischen der Außenwand des Trockenmittelringes 5 und der inneren Mantelfläche des Rotationszylinders 4 ist ein Ringspalt 13 gebildet, in den senkrecht nach oben geführte Bohrungen 26 des Rotationszylinders 4 münden, die wiederum in auf dem Umfang verteilte waagerecht angeordnete Öffnungen 17 übergehen.

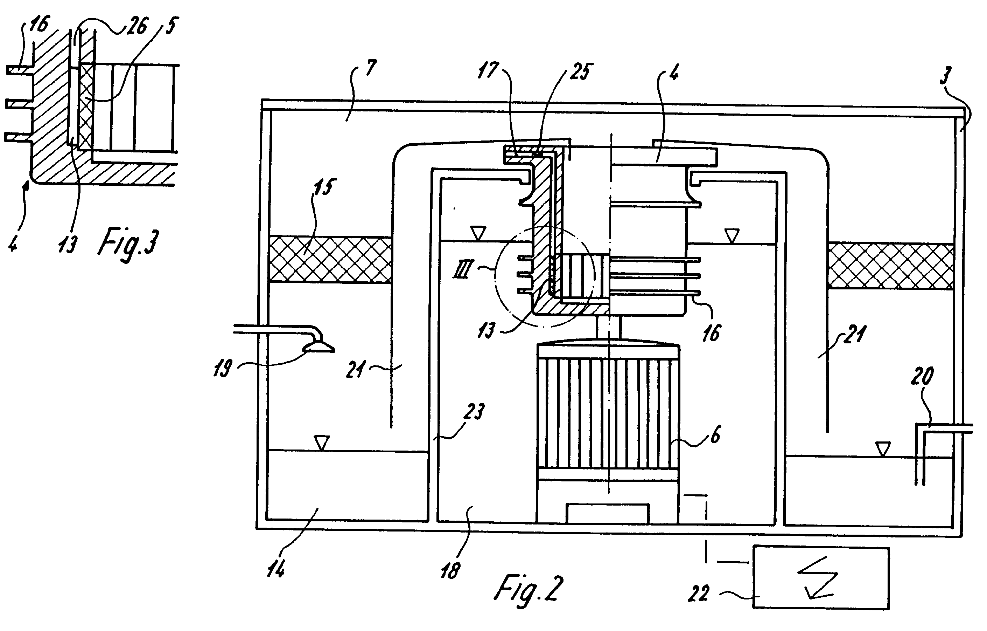

Der Rotationszylinder 4 einschließlich des Trockenmittels 5 ist über einen Antriebsmotor 6, der über einen Frequenzgeber 22 angelassen werden kann, rotierend antreibbar. Bei dem in der Figur 2 gezeigten Ausführungsbeispiel handelt es sich um ein sogenanntes Zweistoffsystem, bei dem das zu verflüssigende dampf- oder gasförmige Medium indirekt durch ein Kühlmittel gekühlt wird, das sich in einer Kühlkammer 18 befindet.

Durch das Kühlmittel werden der Rotationszylinder 4 als auch der Antriebsmotor 6 gekühlt, wobei zur besseren Wärmeableitung am Rotationszylinder 4 Kühlrippen 16 vorgesehen sind.

Grundsätzlich weist die Vorrichtung zwei voneinander getrennte Kammern auf, und zwar eine Hochdruckkammer, die einen Verflüssigerraum bildet und eine Niederdruckkammer 7.

Bei dem in den Figuren 1 bis 4 gezeigten Ausführungsbeispiel wird die Hochdruckkammer durch den Ringspalt 13 sowie die Bohrungen 26 gebildet, in dem sich ein Druckniveau herausbildet, das oberhalb des Verflüssigungsdruckes liegt, so daß sich die austretenden Dampf- bzw. Gasmoleküle zu einem Kondensat verflüssigen.
Die Hochdruckkammer und die Niederdruckkammer 7 werden getrennt durch als Drosselstelle wirkende Überdruckventile 25, die im Übergangsbereich zwischen den Bohrungen 26 und den Öffnungen 17 angeordnet sind.
Ein in der Niederdruckkammer 7 vorgesehenes Demisterpaket 15 dient als Tropfenabscheider.

Im praktischen Betrieb wird zunächst das gesamte System evakuiert und die Kühlflüssigkeit in die Kühlkammer 18 bzw. in die zum Kühlkreislauf gehörenden Rohre und den Wärmetauscher 10 eingefüllt. Weiter wird in das entsprechende Rohrleitungssystem, den Nutzwärmetauscher 12 und die Niederdruckkammer 7 das dampfförmige Medium, im vorliegenden Fall Naßdampf, eingebracht.

Gleichzeitig mit dem Start des Antriebsmotors 6 werden die Umwälzpumpen 9 in Gang gesetzt, von denen eine die in der Niederdruckkammer 7 befindliche kondensierte Flüssigkeit 14 durch den Nutzwärmetauscher 12 und die andere, die Kühlflüssigkeit zum Wärmetauscher 10 transportiert.

Im Nutzwärmetauscher 12, der beispielsweise Bestandteil einer Klimaanlage sein kann, an den eine ständige Wärmezufuhr erfolgt, ergibt sich eine teilweise Verdampfung.

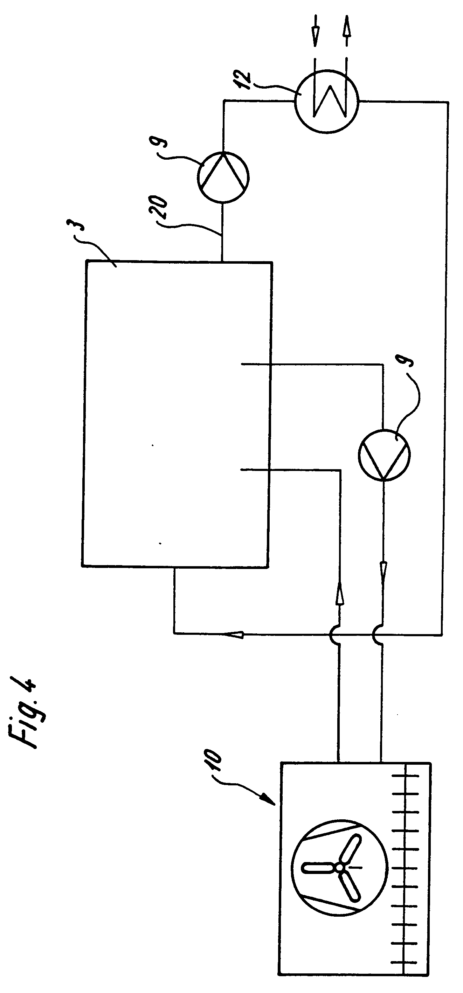

Der vorhandene Naßdampf wird über die offene Seite des Rotationszylinders 4 angesaugt und im Ring 5 zu bestimmten Anteilen adsorbiert und verflüssigt.
Unter Wärmeabfuhr wird das entstehende Kondensat auf dem Weg über die Bohrungen 26 und das in der Figur 3 nicht dargestellte Überdruckventil 25 zu einem Rückführungskanal 21 entspannt und der Niederdruckkammer 7 zugeführt. Während des Entspannungsvorganges erfolgt eine Teilverdampfung des Kondensates, ähnlich wie in einem Expansionsventil bei einem Kompressions-Kältekreislauf.

Die Entspannung erfolgt von Verflüssigungsdruck auf Verdampfungsdruck und das anfallende Kondensat kühlt sich von Verflüssigungstemperatur auf Verdampfungstemperatur ab und nimmt dabei die innere Energie des zu verdampfenden Wassers wieder an.

Die anfallende Verlust- und Kondensationswärme wird über die Kühlflüssigkeit und den Wärmetauscher 10 an Luft, Wasser, Gas oder andere Medien abgegeben.

Um eine Tröpfchenbildung im Ansaugbereich des Rotationszylinders 4 zu vermeiden, weist die Niederdruckkammer 7, wie geschildert, oberhalb einer Versprüheinrichtung 19, über die der im Nutzwärmetauscher 12 erzeugte Naßdampf zugeführt wird, das ringförmige Demisterpaket 15 auf.

Ein weiteres Ausführungsbeispiel einer Vorrichtung ist in der Figur 4 gezeigt.

Im Gegensatz zu dem in den Figuren 2 bis 4 dargestellten Beispiel handelt es sich hierbei ebenso wie bei dem in der Figur 1 gezeigten, um ein sogenanntes Einstoffsystem, bei dem eine direkte Wärmeabfuhr am Rotationszylinder 4 erfolgt.

Als Betriebsmittel wird Wasser gewählt. Der Behälter 3 ist in zwei Kammern geteilt, und zwar in eine als Verflüssigerraum fungierende Hochdruckkammer 8 und eine Niederdruckkammer 7.
Der in dem Behälter 3 angeordnete Rotationszylinder 4 mit dem Ring 5 aus einem Trockenmittel bzw. Molekularsieb, ist zur Niederdruckkammer 7 hin offen, wobei der Übergang durch ein Ansaugrohr 2 gebildet ist, das eine Stopfbuchse 1 aufweist, die in einer die Hochdruckkammer 8 von der Niederdruckkammer 7 trennenden Trennwand 24 gelagert ist, und die die Abdichtung zwischen der Niederdruckkammer 7 und der Hochdruckkammer 8 bildet.

In die Niederdruckkammer 7 mündet ein mit dem Nutzwärmetauscher 12 verbundenes Rohr, in dem der durch den Nutzwärmetauscher 12 entstehende Dampf einströmt.

Auch bei diesem Ausführungsbeispiel sind zunächst der Behälter 3 sowie die zugeordneten Rohrleitungen und Nebenaggregate zu evakuieren, bevor eine Füllung mit Wasser erfolgt.
Danach wird der Rotationszylinder 4 über den Antriebsmotor 6 in Rotation versetzt und eine Umwälzpumpe 9 sowie ein zwischengeschalteter Wärmetauscher in Betrieb genommen.

Nachdem der Rotationszylinder 4 und mit ihm der eingelagerte Ring 5 die vorgesehene Drehzahl erreicht haben, wird über den Molekularverband des Ringes 5 zunächst eventuell vorhandene Flüssigkeit aus dem Innern des Rotationszylinders 4, dann der durch van der Waalssche-Kräfte gebundene und verflüssigte Wasserdampf radial nach außen transportiert.

Zwischen der Niederdruckkammer 7 bzw. dem Inneren des Rotationszylinders 4 einerseits und der Hochdruckkammer 8 baut sich eine Druckdifferenz auf.

Zum Austritt des aus dem Ring 5 freigesetzten Kondensats in die Hochdruckkammer 8 sind im Rotationszylinder 4 radial angeordnete Öffnungen 17 vorgesehen.

Über die Umwälzpumpe 9 wird ständig ein Vielfaches der anfallenden Kondensatmenge umgewälzt und über den Wärmetauscher 10 der Hochdruckkammer 8 wieder zugeführt. Dadurch wird der Rotationszylinder 4, bzw. die übrigen sich erwärmenden Teile gekühlt, d. h. die anfallende Verlust- und Kondensationswärme wird abgeführt.

Ein Teil des durch den Wärmetauscher 10 geführten Flüssigkeitsstromes wird abgezweigt und über einer vor dem Nutzwärmetauscher 12 angeordneten Drosselstelle 11 diesem zugeführt.

Durch die Wärmezufuhr am Nutzwärmetauscher 12 ergibt sich eine ständige Verdampfung und somit ein Zustrom von Dampf-/Gasmolekülen zur Niederdruckkammer 7.
Die anfallenden Moleküle gelangen über das Ansaugrohr 2 an die innere Ringfläche des Ringes 5 und werden dort, wie beschrieben, zu bestimmten Anteilen adsorbiert.

Je nach Betriebsbedingungen ist der Förderstrom zwischen der Hochdruckkammer 8 und dem Wärmetauscher 10 in bestimmtem Umfang mit einem Gasanteil belastet.
Nach der Wärmeabfuhr im Wärmetauscher 10 sind alle Gasanteile kondensiert, so daß sich nur noch Flüssigkeit in der Rohrleitung befindet.

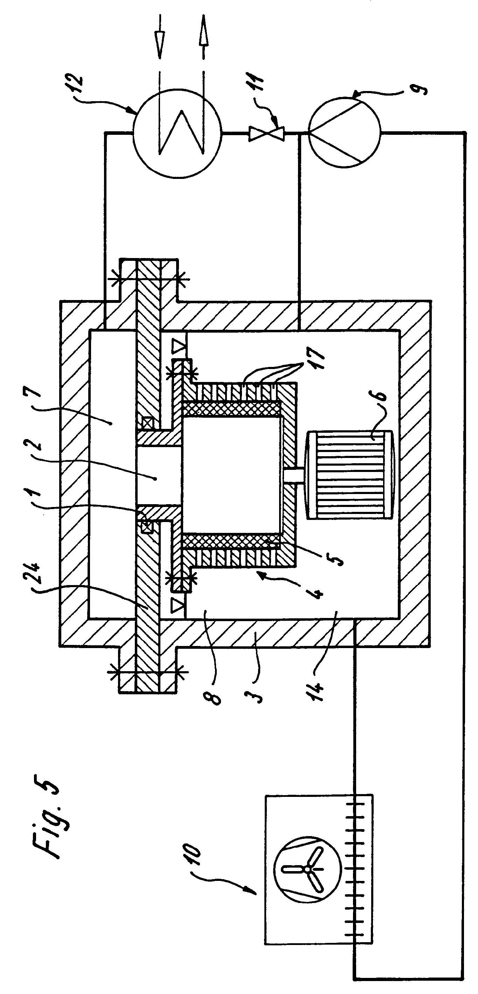

Da sich bei dem in der Figur 5 dargestellten Ausführungsbeispiel zwischen der Hochdruckkammer 8 und der Niederdruckkammer 7 nur geringe Druckunterschiede ergeben, werden lediglich Anforderungen an die Abdichtung zwischen der Stopfbuchse 1 und der Trennwand 24 gestellt, die keine konstruktiv aufwendige Maßnahmen erfordern.
Auch bedeutet eine eventuell geringfügige Leckage im Dichtungsbereich lediglich eine Beeinträchtigung des Wirkungsgrades, nicht jedoch eine Beeinträchtigung der Funktion.

Im Gegensatz zu einer Verdichtung nach dem Verdrängerprinzip, bei dem ein Gas- oder Dampfvolumen angesaugt und mit wechselndem Polytropenexponenten auf Verflüssigungsdruck verdichtet wird, werden bei den erfindungsgemäßen Verfahren mit einem bestimmten Wirkungsgrad lediglich die mit hoher Geschwindigkeit in der Niederdruckkammer 7 sich bewegenden Gas-/Dampfmoleküle mittels van der Waalsscher-Kräfte eingefangen.

Der Zustrom der Dampf-/Gasmoleküle zur inneren Ringfläche des rotierenden Ringes 5 ist vergleichbar mit dem Zustrom von Gas-/Dampfmolekülen bei einem Strahlapparat. Aufgrund der relativ hohen Geschwindigkeit der Dampfmoleküle (bei Wasserdampf im Bereich von +4°C leicht überhitzt, beträgt die mittlere Geschwindigkeit über 600 m/sec.) ist der vorhandene Ansaugquerschnitt über den Rotationszylinder 4 mehr als ausreichend bemessen, um ein ständiges Nachströmen der zu adsorbierenden Moleküle zu gewährleisten.

Die genaue Oberfläche, die Art des Trockenmittels bzw. des Molekularsiebes, sowie die Drehzahl und Geometrie des rotierenden Ringes 5 hängen vom zu kondensierenden Stoff ab und können theoretisch vorbestimmt, jedoch bezüglich des Verhältnisses auftreffende:adsorbierte Dampf-/Gasmoleküle pro Zeiteinheit auch empirisch ermittelt werden.

Die Dicke des Ringes 5 muß so bemessen sein, daß eine Nachverdampfung des bereits verflüssigten Dampfes/Gases von der Außenseite in Richtung zum Inneren des rotierenden Ringes 5 verhindert wird. Gleichzeitig muß die Dicke des Ringes 5 ausreichen, eine Wärmeabfuhr nach außen zu gewährleisten. Diese kann beispielsweise dadurch verbessert werden, daß eine Legierung bzw. Sinterung zwischen dem Trockenmittel/Molekularsieb - Material und einem neutralen, gut wärmeleitenden Stoff, wie z. B. Aluminium, verwendet wird.

Die zu indizerende Leistung wird bestimmt von den auf Umfangsgeschwindigkeit beschleunigten Dampf-/Gasmolekülen, den Flüssigkeitsreibungsverlusten auf der Außenseite des Rotationszylinders 4, der Leistungsaufnahme der Nebenaggregate sowie dem Wirkungsgrad des Antriebsmotors 6 mit ggf. angeschlossenen Frequenzumformer.

Das beispielhaft anhand von Wasserdampf erläuterte Verfahren kann sinngemäß auch für andere technische Gase sowie für höhermolekulare Stoffe eingesetzt werden.

## Patentansprüche

1. Verfahren zum Verflüssigen eines dampfförmigen Mediums, **dadurch gekennzeichnet**, daß das Medium von innen nach außen durch einen rotierenden gekühlten Ring (5), bestehend aus einem Molekularsieb oder Trockenmittel, gepreßt wird.

2. Verfahren nach Anspruch 1, dadurch gekennzeichnet, daß das auf der Außenseite des Ringes (5) austretende Kondensat zunächst über eine Hochdruckkammer (8), anschließend über einen Nutzwärmetauscher (12) und danach über eine Niederdruckkammer (7), die unmittelbar in das Innere des Ringes (5) übergeht , im Kreislauf geführt wird.

3. Vorrichtung zur Durchführung des Verfahrens nach Anspruch 1, dadurch gekennzeichnet, daß der aus einem Molekularsieb oder Trockenmittel bestehende Ring (5) an der inneren Mantelfläche eines mit Öffnungen (17) versehenen, gut wärmeleitfähigen Rotationszylinders (4) angeordnet ist, der zumindest teilweise von einer Kühlflüssigkeit umspült wird.

4. Vorrichtung nach Anspruch 3, dadurch gekennzeichnet, daß die Höhe des Ringes (5) sich über einen Teilbereich des Rotationszylinders (4) erstreckt, wobei zwischen der Außenseite des Ringes (5) und der Innenseite des Rotationszylinders (4) ein Ringspalt (13) gebildet ist, in den parallel zur Mittenachse des Rotationszylinders (4) angeordnete Bohrungen (26) münden, die andererseits in die Öffnungen (17) übergehen.

5. Vorrichtung nach Anspruch 4, dadurch gekennzeichnet, daß im Übergangsbereich zwischen den Bohrungen (26) und den Öffnungen (17) jeweils ein federbelastetes Überdruckventil (25) vorgesehen ist.

6. Vorrichtung nach Anspruch 3, dadurch gekennzeichnet, daß der Rotationszylinder (4) bzw. der Ring (5) in einem Gehäuse (3) angeordnet sind, das gegenüber dem Umgebungsbereich hermetisch abgeschlossen ist.

7. Vorrichtung nach Anspruch 5, dadurch gekennzeichnet, daß die Öffnungen (17) in einen Rückführungskanal (21) münden, der in eine Niederdruckkammer (7) geführt ist, die in den Innenraum des Rotationszylinders (4) übergeht und in der ein geringerer Druck herrscht als in dem Ringspalt (13) bzw. den Bohrungen (26).

8. Vorrichtung nach einem der Ansprüche 3 bis 7, dadurch gekennzeichnet, daß in der Niederdruckkammer (7) ein diese in zwei Kammerbereiche teilendes Demisterpaket (15) vorgesehen ist.

9. Vorrichtung nach Anspruch 3, dadurch gekennzeichnet, daß der Behälter (3) durch eine Trennwand (24) in eine untere Hochdruckkammer (8) und eine obere Niederdruckkammer (7) unterteilt ist, wobei die Niederdruckkammer (7) über ein Ansaugrohr (2) in den Innenraum des Rotationszylinders (4) bzw. des Ringes (5) übergeht, wobei der in der Niederdruckkammer (7) herrschende Druck geringer ist als der in der Hochdruckkammer (8).

10. Vorrichtung nach einem der vorhergehenden Ansprüche 3 bis 9, dadurch gekennzeichnet, daß der Ring (5) aus einer Legierung bzw. einem Sintermaterial von einerseits Trockenmittel oder Molekularsieb und andererseits einem gut wärmeleitenden Material besteht.

## Claims

1. A process for condensing a medium in vapour form characterized in that the medium is pressed from the inside outwardly through a rotating cooled ring (5) comprising a molecular sieve or drying agent.

2. A process according to claim 1 characterised in that the condensate which issues on the outside of the ring (5) is firstly circulated by way of a high-pressure chamber (8), then by way of a useful heat exchanger (12) and thereafter by way of a low-pressure chamber (7) which communicates directly with the interior of the ring (5).

3. Apparatus for carrying out the process according to claim 1 characterised in that the ring (5) which comprises a molecular sieve or drying agent is arranged at the inner peripheral surface of a rotary cylinder (4) which is provided with openings (17) and which exhibits good thermal conductivity, a cooling fluid flowing at least in part around the rotary cylinder.

4. Apparatus according to claim 3 characterised in that the height of the ring (5) extends over a portion of the rotary cylinder (4), wherein formed between the outside of the ring (5) and the inside of the rotary cylinder (4) is an annular gap (13) into which open bores (26) which are disposed parallel to the centre line of the rotary cylinder (4) and which on the other hand communicate with the openings (17).

5. Apparatus according to claim 4 characterised in that a respective spring-loaded pressure relief valve (25) is disposed in the transitional region between each of the bores (26) and the openings (17).

6. Apparatus according to claim 3 characterised in that the rotary cylinder (4) and the ring (5) are arranged in a housing (3) which is hermetically sealed relative to the area therearound.

7. Apparatus according to claim 5 characterised in that the openings (17) open into a return passage (21) which is passed into a low-pressure chamber (7) which communicates with the interior of the rotary cylinder (4) and in which there obtains a lower pressure than in the annular gap (13) and the bores (26).

8. Apparatus according to one of claims 3 to 7 characterised in that a demister pack (15) is disposed in the low-pressure chamber (7) and divides said chamber into two chamber regions.

9. Apparatus according to claim 3 characterised in that the container (3) is divided by a partition (24) into a lower high-pressure chamber (8) and an upper low-pressure chamber (7), wherein the low-pressure chamber (7) is communicated by way of a suction pipe (2) with the interior of the rotary cylinder (4) and the ring (5), the pressure obtaining in the low-pressure chamber (7) beingless than that in the high-pressure chamber (8).

10. Apparatus according to one of preceding claims 3 to 9 characterised in that the ring (5) comprises an alloy or a sintered material of on the one hand drying agent or molecular sieve and on the other hand a material which is a good conductor of heat.

## Revendications

1. Procédé de condensation d'un milieu se présentant à l'état de vapeur, caractérisé en ce que le milieu est comprimé de l'intérieur vers l'extérieur, au moyen d'un anneau (5) refroidi tournant, composé d'un tamis moléculaire ou d'un produit desséchant.

2. Procédé selon la revendication 1, caractérisé en ce que le condensat apparaissant sur la face extérieure de l'anneau (5) est guidé selon un mouvement circulaire, d'abord sur une chambre haute pression (8), puis sur un échangeur de chaleur utile (12) et ensuite sur une chambre basse pression (7), se transformant directement à l'intérieur de l'anneau (5).

3. Dispositif pour mettre en oeuvre le procédé selon la revendication 1, caractérisé en ce que l'anneau (5), composé d'un tamis moléculaire ou d'un produit desséchant, est disposé sur la paroi interne d'un cylindre tournant (4) bon conducteur de la chaleur, pourvu d'ouvertures (17), soumis au moins partiellement à un écoulement de liquide de refroidissement.

4. Dispositif selon la revendication 3, caractérisé en ce que la hauteur de l'anneau (5) s'étend sur une zone partielle du cylindre tournant (4), de manière que, entre la face extérieure de l'anneau (5) et la face intérieure du cylindre tournant (4), est formé un interstice annulaire (13), dans lequel débouchent des perçages (26), disposés parallèlement à l'axe médian du cylindre tournant (4) et se transformant, de l'autre côté, en les ouvertures (17).

5. Dispositif selon la revendication 4, caractérisé en ce qu'une soupape de surpression (25), sollicitée par un ressort, est chaque fois prévue dans la zone de transition entre les perçages (26) et les ouvertures (17).

6. Dispositif selon la revendication 3, caractérisé en ce que le cylindre tournant (4), et/ou l'anneau (5) sont disposés dans un carter (3) délimité de façon hermétique par rapport à la zone ambiante.

7. Dispositif selon la revendication 5, caractérisé en ce que les ouvertures (17) débouchent dans un canal de recirculation (21), guidé dans une chambre basse pression (7), se transformant en l'espace intérieur du cylindre tournant (4) et dans laquelle règne une pression inférieure à celle qui règne dans l'interstice annulaire (13), et/ou dans les perçages (26).

8. Dispositif selon l'une des revendications 3 à 7, caractérisé en ce que, dans la chambre basse pression (7), est prévue un bloc anti-buée (15) divisant celle-ci en deux zones.

9. Dispositif selon la revendication 3, caractérisé en ce que le récipient (3) est subdivisé, au moyen d'une paroi de séparation (24), en une chambre haute pression inférieure (8) et une chambre basse pression supérieure (7), la chambre basse pression (7) se transformant, par un tube d'aspiration (2), en l'espace intérieur du cylindre tournant (4), et/ou de l'anneau (5), la pression régnant dans la chambre basse pression (7) étant inférieure à celle régnant dans la chambre haute pression (8).

10. Dispositif selon l'une des revendications 3 à 9 précédentes, caractérisé en ce que l'anneau (5) est composé d'un alliage, respectivement d'un matériau fritté, composé, d'une part, d'un produit desséchant ou d'un tamis moléculaire et, d'autre part, d'un matériau bon conducteur de la chaleur.
